# EUROPEAN PATENT APPLICATION

(11) **EP 4 194 219 A1**
(43) Date of publication of application: **14.06.2023**
(21) Application number: 21213109.8
(22) Date of filing: 08.12.2021
(51) Int. Cl.: B42D 15/04, B42D 25/23, B42D 25/305, B42D 25/369

(54) **DUAL IDENTIFICATION DOCUMENT**

(71) Applicant: Assa Abloy AB, 107 23 Stockholm (SE)
(72) Inventor: Ayala, Stéphane, 1610 Oron-la-ville (CH); Serrao, Salvatore, 1624 Grattavache (CH)
(74) Representative: Kramer Barske Schmidtchen Patentanwälte PartG mbB

(57) **Abstract**

The present disclosure refers to an identification document (1) consisting of at least two cards (10, 20) made at least partially of plastic, an identification feature (3) including personal data such as for example a photograph, and a connecting unit (15). The identification feature (3) extends over at least two cards (10, 20). The connecting unit (15) inseparably connects the at least two cards (10, 20) such that, in a closed state, the at least two cards (10, 20) face each other and, in an open state, the at least two cards (10, 20) extend beside each other. The personal data of the identification feature is visible in the open state and is not visible in the closed state. The identification document may comprise an RFID chip module (32) and a shielding layer (31) configured to shield electromagnetic waves. The cards can be connected by a rivet (16).

## Description

### Technical Field

The present disclosure generally relates to an identification document and particularly to an identification document solely consisting of at least two cards connected with each other.

### Background

The use of identification documents and other credentials is pervasive. Identification documents are used on a daily basis for a number of different purposes. Identification documents are most commonly used to prove identity, to verify age, to access an asset (e.g., secure area, financial account, computing resource, etc.), to evidence driving privileges, to cash a check, and so on. Airplane passengers are required to show an identification document during check in, and sometimes at security screening and prior to boarding their flight. We also live in an ever-evolving cashless society where identification documents are used to make payments, access an automated teller machine (ATM), debit an account, or make a payment, etc. Many industries require that their employees carry photo identification documents on the job and to access various locations on a job site.

For the purposes of this disclosure, identification documents are broadly defined and may include, for example, credit cards, bank cards, phone cards, passports, driver's licenses, network access cards, employee badges, debit cards, security cards, visas, immigration documentation, national ID cards, citizenship cards, social security cards, security badges, certificates, identification cards, voter registration cards, police ID cards, border crossing cards, legal instruments or documentation, security clearance badges and cards, gun permits, gift certificates or cards, labels or product packaging, membership cards or badges, etc. Identification documents may sometimes be interchangeably referred to as "security documents," "ID documents," "credential documents," "security credentials," "photo- IDs," and "photo ID documents".

Identification documents are provided with indicia of identification (identification features) of the document holder such as for example the full name, the photograph, the date of birth and the signature of the document holder.

Further, identification documents usually are provided with security features such as for example laser engraving/personalization, holograms, security printing. Security features are directed to verifying the authenticity of the document. A further known security element is an RFID chip module. Usually, the RFID chip module is embedded in a plastic card. Such plastic card including an RFID chip module may be referred to as smart card. Smart cards usually are configured to securely store personal information of the holder and to allow a contactless reading of the personal information by for example border control authorities. On a smart card, further security features or indicia for identification (e.g., photograph, date of birth) besides the RFID chip module may be provided.

Identification documents such as a passport may comprise a rigid cover and multiple pages inside the rigid cover. A page of the identification document may be formed by one sheet which is foldable around a folding line such that it forms one page on each side of the folding line. In the region of the folding line, the one sheet is connected to the rigid cover. Alternatively, a page of the identification document may comprise a hinge by which the page is connected to the rigid cover in the region of the folding line. At least one of the multiple pages of the identification document usually comprises at least one identification feature such as a photograph and/or a security feature such as a smart card.

The connection of the rigid cover and the multiple pages of an identification document usually is configured to be difficult to disconnect. If a connection is easy to disconnect, the connection may carry a high risk of counterfeiting.

EP 1 718 476 B1 discloses a book-type security document. The book-type security document comprises a transponder unit on a first page and personalized data on a second page. The first page and the second page are surrounded by a common laminate layer which comprises a folding line between the first page and the second page. The book-type security document comprises a book cover to which the common laminate layer is connected.

The present disclosure is directed to provide a counterfeit-proof and compact structure for an identification document.

### Summary of the Disclosure

The present disclosure relates to an identification document solely consisting of at least two cards, an identification feature and a connecting unit. The at least two cards are made at least partially of plastic. The identification feature includes personal data such as for example a photograph and extends over at least two cards. The connecting unit inseparably connects the at least two cards such that, in a closed state, the at least two cards face each other and, in an open state, the at least two cards extend beside each other. The personal data of the identification feature is visible in the open state and is not visible in the closed state.

The present disclosure is based at least in part on the realization that a card of an identification document may simultaneously be used as a carrier for identification information (i.e., a subset of an identification feature) and as a cover for the identification document. Thus, in an identification document according to the present disclosure, the known form element of a rigid cover of an identification document and the known form element of a card including an identification feature such as, for example, a photograph are merged for the first time. By means of merging the rigid cover with the card including an identification information (i.e., a part of the complete identification feature), a separation of the card including the identification information from the rigid cover is prevented as in such structure the card at the same time functions as rigid cover. Thus, a highly counterfeit-proof structure for an identification document is provided.

Further, it has been realized that by providing the identification feature on at least two cards, no further cover is required and the number of components of the identification document may be reduced. Thus, a compact structure for an identification document is provided.

Further, it has been realized that by providing an identification feature which extends at least over two cards (i.e., parts/subsets of the complete identification feature are provided on at least to cards), larger identification features may be used compared to identification features which are provided on a single card only. The document holder can still keep the card in a traditional wallet when it is in closed state. In addition, the security of the identification document is increased as the identification feature which extends at least over two cards is destroyed when these at least two cards of the identification document are disconnected by unauthorized persons, for example by counterfeiters. Thus, it has been realized that it is beneficial that at least two cards serve together to create the identification feature.

Further, it has been realized that the counterfeit-proof property of the identification document may be increased by hiding personal information on the identification feature in the closed state. By closing the identification document, i.e. by bringing the at least two cards in a position in which they face each other, the identification feature is not revealed. For example, a photograph may not be visible.

The identification document according to the present disclosure solely consists of at least two cards, an identification feature and a connecting unit.

Solely in the sense of this disclosure specifically refers to an additional cover and means that the identification document does not comprise a cover in addition to the at least two cards. However, solely in the sense of this disclosure does not exclude that the at least two cards may - besides the identification feature - comprise further elements such as for example a locking device and/or a shielding layer configured to shield electromagnetic waves.

Solely in the sense of this disclosure means that the identification document comprising the at least two cards, the connecting unit and the identification feature is a stand-alone document. It is not designed to be incorporated into a booklet such as for example a passport.

According to an exemplary embodiment, the cards are made of a rigid material. Rigid in the sense of the present disclosure refers to the bending stiffness of plastic materials usually used for smart cards such as for example PVC, ABS, PET or PC. The bending stiffness for a smart card is defined by ISO/IEC 7810 standard, latest available version as of November 2021. The measurement method is described in ISO/IEC 10373-1, latest available version as of November 2021.

The connecting unit connects the at least two cards such that, in a closed state, the at least two cards face each other. Thus, in the closed state, the at least two cards at least partly overlap each other.

The connecting unit connects the at least two cards such that, in an open state, the at least two cards extend beside each other. Thus, in the open state, the at least two cards do not overlap each other.

Inseparably connecting the at least two cards by the connecting unit means that the at least two cards cannot be disconnected without causing damage to at least one of the cards.

According to an exemplary embodiment, the at least two cards are a first card and a second card. The first card is made at least partially of plastic and has a first dimension, a second dimension, a thickness, and a side bearing a first identification information. The first identification information is a subset of an identification feature. The second card is made at least partially of plastic and having the first dimension, the second dimension, the thickness, and a side bearing a second identification information. The second identification information is a subset of an identification feature. The connecting unit inseparably connects the first card and the second card. When the identification document is in an open state, the first card and the second card are in the same plane and together have the first dimension, the thickness, and twice the second dimension. Further, when the identification document is in an open state, the first identification information and the second identification information align and combine to form the identification feature. When the identification document is in a closed state, the first card and the second card align and are parallel to each other and together have the first dimension, the second dimension, and twice the thickness. Further, when the identification document is in a closed state, the first identification information and the second identification information are not visible.

The first card and the second card are connected such that the first identification information and the second identification information align and in combination form the identification feature.

When the identification document is in an open state, the first card and the second card are in the same plane and together have the first dimension, the thickness, and twice the second dimension. That means that a first dimension of the identification document corresponds to the first dimension of the first or second card, that a thickness of the identification document corresponds to the thickness of the first or second card, and a second dimension of the identification document corresponds to twice the thickness of the first or second card.

According to an exemplary embodiment, when the identification document is in an open state, the first card and the second card are in the same plane and together have the first dimension, the thickness, and a dimension which corresponds to twice the second dimension and some additional dimension for the connecting unit. The additional dimension however is small in comparison with the second dimension. Preferably, the additional dimension is less than 5% of the second dimension.

When the identification document is in the open state, the first identification information and the second identification information align and combine to form the identification feature. In case, the identification document comprises an additional dimension for the connecting unit, the connecting unit may comprise a third identification information which serve as a bridge between the first identification information and the second identification information such that the first identification information, the second identification information and the third identification information in combination form the identification feature.

According to an exemplary embodiment, the at least two cards each comprise edges and the connecting unit of the identification document inseparably connects two cards by connecting an edge of a first card to an edge of a second card along the entire length of these edges.

The at least two cards may comprise short edges and long edges. The connecting unit may connect the at least two cards at their long edges or their short edges via the connecting unit.

According to an exemplary embodiment, the at least two cards each comprise edges and the connecting unit of the identification document inseparably connects two cards by connecting an edge of the first card to an edge of the second card along parts of these edges and not the entire length of these edges. For example, the connecting unit may connect two cards in an upper section and a lower section of the edges only.

According to an exemplary embodiment, the identification document may comprise a security feature such as an RFID chip module.

According to an exemplary embodiment, at least one of the cards is a smart card, i.e., a plastic card with an embedded RFID chip module.

According to an exemplary embodiment, the identification document comprises a security feature, wherein a first subset of the security feature is provided on the first card and a second subset of the security feature is provided on the second card. The first subset of the security feature and the second subset of the security feature form the security feature.

As the security feature extends over at least two cards, the security of the identification document is increased as the security feature which extends at least over two cards is destroyed when these at least two cards of the identification document are disconnected by unauthorized persons, for example by counterfeiters. Thus, the security of the identification document is increased when at least two cards serve together to create the security feature.

### Material and structure of the at least two cards

The at least two cards are made at least partially of plastic. According to an exemplary embodiment, the at least two cards are made of PVC, ABS, PET or PC or a mixture of it.

An identification feature such as for example a photo extends over at least two cards.

The at least two cards may comprise one or more layers.

The at least two cards may comprise further elements such as for example a magnet element and/or a shielding layer configured to shield electromagnetic waves.

Each of the at least two cards may have a thickness in the range of 400 µm to 840 µm.

### Connecting unit

The connecting unit is configured to connect the at least two cards in series and to connect adjacent cards such that they are foldable on top of each other.

The connecting unit may for example connect two, four, six or eight cards which each other. The two, four, six or eight cards may be folded on top of each other to bring the identification document in closed state.

The at least two cards and the connecting unit may be integrally formed.

The identification document may for example comprise a first layer which is part of the at least two cards and the connecting unit. In the region of the at least two cards, the identification document may comprise further layers besides the first layer. In the region of the connecting unit, no further layers may be provided such that the connecting unit is formed by the part of the first layer which is positioned between the at least two cards. The connecting unit may also be referred to as a hinge of the identification document. The at least two cards may also referred to as data pages of the identification document.

The at least two cards and the connecting unit may be made of the same material.

The connecting unit may comprise an elastic material, for example an elastic polymer. Due to its flexibility, the elastic material may be configured to get back (to move) to the open state when no external force is applied. The open state in this case corresponds to an unfolded state of the identification document. That means that the elastic material may be configured to bring the identification document in the open state in which the at least two cards extend beside each other when no external force is applied.

By applying an external force the identification document may by brought into the closed state in which the at least two cards face each other. The closed state in this case corresponds to a folded state of the identification document. A clip system, magnets or other elements may be used to keep the identification document in the closed state.

### Exemplary embodiments

According to an exemplary embodiment, the identification document comprises an RFID chip module and a shielding layer and the RFID chip module and the shielding layer are arranged such that the shielding layer prevents access to the personal data of the RFID chip module in the closed state of the identification document.

The shielding layer preferably covers at least one card of the at least two cards. The shielding layer may be made of or comprise copper or aluminum.

According to an exemplary embodiment, the identification document further comprises a locking device. The locking device is configured to hold together the at least two cards when the identification document is in the closed state.

Such locking device may for example comprise a first magnet element on a first card and/or a second magnet element on a second card.

According to an exemplary embodiment, the identification document has a first dimension and a second dimension according to ID 1 size when in closed state, the dimensions being defined according to international standard ISO/IEC 7810, latest available version as of November 2021. Other dimensions such as the thickness of the identification document in the closed state may or may not correspond to ID 1 size. In an embodiment with two cards, the two cards may for example both have half the thickness of ID 1 size. Thus, the thickness of the identification document in closed state corresponds to the thickness of ID 1 size.

According to an exemplary embodiment, the identification document has a first dimension or a second dimension according to 2 x ID 1 size when in open state, the card dimensions being defined according to international standard ISO/IEC 7810, latest available version as of November 2021. Thus, for example the width of the identification document corresponds to twice the width of ID 1 size or the height of the identification document corresponds to twice the height of ID 1 size depending on whether the first card and the second card of the identification document are connected to each other at their long edges or their short edges via the connecting unit.

According to a further aspect of this disclosure, an identification document comprises at least two cards made at least partially of plastic, an identification feature including personal data such as for example a photograph, the identification feature extending over at least two cards, and a connecting unit inseparably connecting the at least two cards such that, in a closed state, the at least two cards face each other and, in an open state, the at least two cards extend beside each other. The connecting unit of the identification document comprises a rivet connecting the at least two cards rotatably to one another.

The rivet connects the at least two cards such that, in an open state, the at least two cards extend beside each other. If the at least two cards extend beside each other, at least 50%, preferably at least 70% and more preferably at least 90% of each of the at least two cards do not overlap each other when viewed in thickness direction of one of the at least two cards. Thus, the at least two cards may partly overlap each other when in open state and viewed in thickness direction of one of the at least two cards.

The rivet connects the at least two cards such that, in a closed state, the at least two cards face each other. Thus, in the closed state, the at least two cards at least partly overlap each other.

The outermost cards of the at least two cards in the closed state of the identification document may be provided with a recess in the area of the connection to the rivet such that the rivet does not protrude over the outermost cards.

According to a further aspect of this disclosure, an identification document comprises at least two cards made at least partially of plastic, an identification feature including personal data such as for example a photograph, the identification feature extending over at least two cards, and a connecting unit inseparably connecting the at least two cards such that, in a closed state, the at least two cards face each other and, in an open state, the at least two cards extend beside each other. The personal data of the identification feature is visible in the open state and is not visible in the closed state.

Such identification document may further comprise a cover which is connected to the at least two cards. Thus, the at least two cards may be designed to be incorporated into the cover to form a booklet such as for example a passport.

### Brief Description of the Drawings

Fig. 1 shows an identification document 1 in a perspective view according to a first embodiment.
Fig. 2 shows an identification document 1 in a side view according to a second embodiment in a closed state in Fig. 2a) and in an open state in Fig. 2b).
Fig. 3 shows an identification document 1 in a side view according to a third embodiment in an open state.
Fig. 4 shows an identification document 1 in a top view according to a further aspect of this disclosure in an open state in Fig. 4a) and in a closed state 4b).
Fig. 5 is a cross-sectional view of the rivet shown in Fig. 4 along line A-A in Fig. 4.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of protection. Rather, the scope of protection shall be defined by the appended claims.

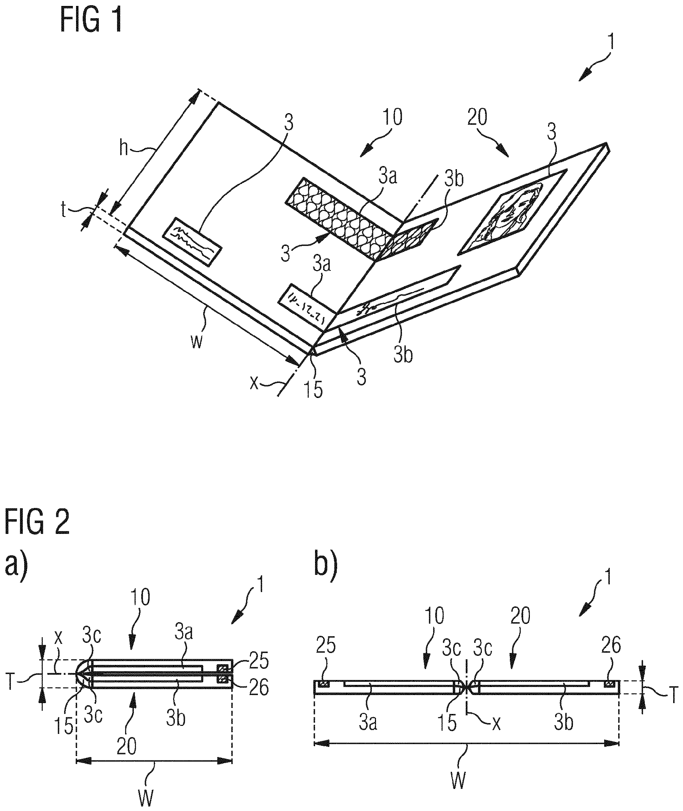

Fig. 1 shows an identification document 1 in a perspective view according to a first embodiment. A first card 10 is connected to a second card 20 via a connecting unit 15. The first card 10 and the second card 20 are in a partly folded state. The connecting unit 15 allows a rotational movement of the first card 10 and the second card 20 around the axis X. Each of the first card 10 and the second card 20 comprises one layer. The identification document 1 comprises four identification features 3. Two of the four identification features 3 extend from the first card 10 over the connecting unit 15 to the second card 20. Each of these two identification features 3 comprise a first identification information 3a on the first card 10 and a second identification information 3b on the second card 20. The first identification information 3a and the second identification information 3b are a subset of the identification feature 3. In combination, the first identification information 3a and the second identification information 3b form an identification feature 3. The first card 10 has the first dimension h (which extends in parallel to axis X), the second dimension w (which extends perpendicular to axis X) and the thickness t.

Fig. 2 shows an identification document 1 in a side view according to a second embodiment in a closed or folded state in Fig. 2a) and in an open or unfolded state in Fig. 2b). The identification document 1 comprises a first card 10 and a second card 20 which are connected via the connecting unit 15. Each of the first card 10 and the second card 20 comprises one layer. The identification document comprises an identification feature 3 of which a first subset 3a is provided on the first card 10 and a second subset is provided on the second card 20. In addition to the first subset on the first card and the second subset on the second card, the identification feature comprises a subset provided on the connecting unit 3c. Thus, the first subset 3a provided on the first card 10, the second subset 3b provided on the second card 20 and the third subset 3c provided on the connecting unit 15 in combination form the identification feature 3. Further, the first card 10 comprises a first magnet element 25 and the second card 20 comprises a second magnet element 26. In the folded state as shown in Fig. 2a) the first card 10 and the second card 20 face each other. The first and second magnet elements 25, 26 are arranged on the identification document 1 such that in the folded state the first and second magnet element 25, 26 face each other. In the unfolded state as shown in Fig. 2b) the first card 10 and the second card 20 extend beside each other. The thickness T of the identification document in the closed state (as shown in 2a)) is twice the thickness T of the identification document in the open state (as shown in 2b)). The second dimension W of the identification document 1 in the closed state (as shown in 2a)) is half the second dimension W of the identification document 1 in the open state (as shown in 2b)).

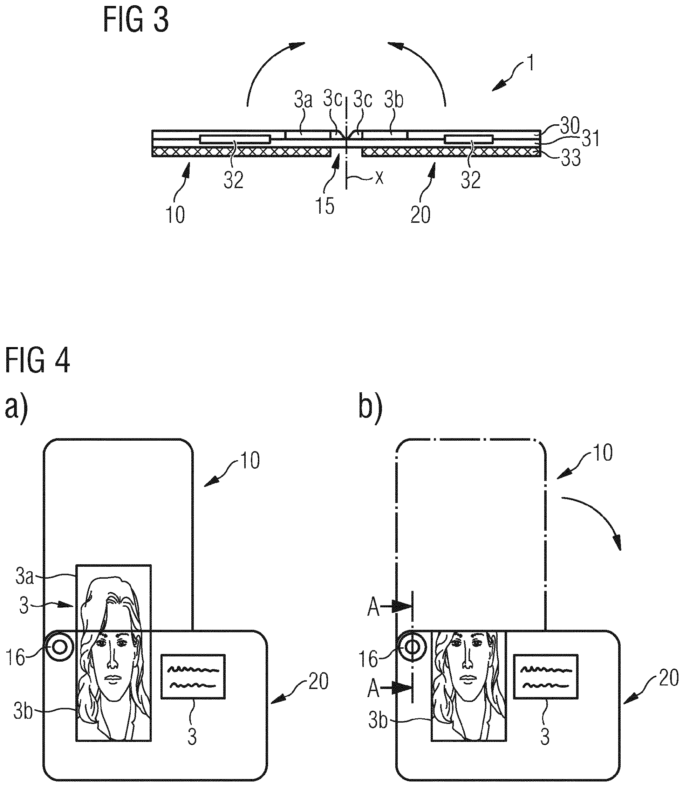

Fig. 3 shows an identification document 1 in a side view according to a third embodiment in an unfolded state. Each of the first card 10 and the second card 20 comprises a top layer 30, a medium layer 31, and a bottom layer 33. The top layer 30 and the middle layer 31 are made of plastic such as PVC or PC. On each of the first card 10 and the second card 20, a security feature 32 such as an RFID chip module is embedded between the top layer 30 and middle layer 31. Further, the identification document 1 comprises an identification feature 3 provided on the top layer 30. The bottom layer is a shielding layer 33 configured to shield electromagnetic waves. The shielding layer 33 is the outermost layer when the identification document 1 is in a folded state. Fig. 3 indicates with arrows the folding direction of the first card 10 and the second card 20.

Fig. 4 shows an identification document 1 in a top view according to a further aspect of the present disclosure in an open state in Fig. 4a) and in a closed state 4b). The identification document 1 comprises a first card 10 and a second card 20. The first card 10 and the second card 20 are rotatably connected to one another by means of a rivet 16. The identification document 1 comprises a first identification information 3a on the first card 10 and a second identification information 3b on the second card 20.

In Fig. 4a) the identification document is in open state. The first card 10 and the second card 20 extend beside each other. To a large extend, the surface of the first card 10 is not covered by the second card 20 when viewed in thickness direction of the first card 10 respectively the second card 20. Thus, the identification feature 3 respectively the identification information 3a provided on the first card 10 and the identification information 3b provided on the second card 20 are visible.

In Fig. 4b) the identification document is in closed state. The first card 10 and the second card 20 face each other. The surface of the first card 10 is covered by the second card 20 when viewed in thickness direction of the first card 10 respectively the second card 20 (thickness direction is perpendicular to the paper plane of the figure). Thus, the identification feature 3 respectively the identification information 3a provided on the first card 10 are not visible. The position of the first card 10 in open position is indicated with a dotted line. The rotational movement of the first card when brought from the open state into the closed state of the identification document is indicated with an arrow.

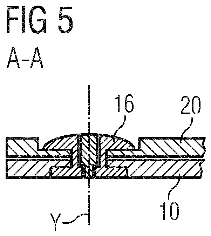

Fig. 5 is a cross-sectional view of the rivet along line A-A in Fig. 4. The rivet 6 rotatably connects the first card 10 and the second card 20. The first card 10 and the second card 20 are provided with a recess such that the rivet 6 does not protrude over the first card 10 and the second card 20 in thickness direction of the identification document 1.

### Industrial applicability

An identification document according to the present disclosure provides a very cost effective structure and allows implementation of identification features extending over at least two cards of the identification document. The structure of the identification document prevents the separation of the cards including an identification feature from the cover as in such structure the cards at the same time function as cover of the identification document. Thus, a counterfeit-proof structure for an identification document is provided. Especially from government side, these features may be considered as very advantageous.

From citizen side, an identification document according to the present disclosure is highly convenient, as it is very compact, easy to transport and may be configured to be an ideal complement to their digital ID. It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

### List of reference signs

- 1: identification document
- 3: identification feature
- 3a: first identification information
- 3b: second identification information
- 3c: third identification information
- 10: first card
- 15: connecting unit
- 16: rivet
- 20: second card
- 25: first magnet element
- 26: second magnet element
- 30: layer made of plastic
- 31: layer made of plastic
- 32: security feature
- 33: shielding layer
- h: first dimension of card
- w: second dimension of card
- t: thickness of card
- H: first dimension of identification document
- W: second dimension of identification document
- T: thickness of identification document

## Claims

1. An identification document (1) solely consisting of:
- at least two cards (10, 20) made at least partially of plastic;
- an identification feature (3) including personal data such as for example a photograph, the identification feature (3) extending over at least two cards (10, 20); and
- a connecting unit (15) inseparably connecting the at least two cards (10, 20) such that, in a closed state, the at least two cards (10, 20) face each other and, in an open state, the at least two cards (10, 20) extend beside each other,
wherein the personal data of the identification feature (1) is visible in the open state and is not visible in the closed state.

2. The identification document (1) according to claim 1, wherein
- the at least two cards (10, 20) are a first card (10) and a second card (20),
- the first card (10) has a first dimension (h), a second dimension (w), a thickness (t), and a side bearing a first identification information (3a), wherein the first identification information (3a) is a subset of an identification feature (3);
- the second card (20) has the first dimension (h), the second dimension (w), the thickness (t), and a side bearing a second identification information (3b), wherein the second identification information (3b) is a subset of the identification feature (3);
- the connecting unit (15) inseparably connects the first card (10) and the second card (20); and
- when the identification document (1) is in an open state:
∘ the first card (10) and the second card (20) are in the same plane and together have the first dimension (h), the thickness (t), and twice the second dimension (w); and
∘ the first identification information (3a) and the second identification information (3b) align and combine to form the identification feature (3); and
- when the identification document (1) is in a closed state:
∘ the first card (10) and the second card (20) align and are parallel to each other and together have the first dimension (h), the second dimension (w), and twice the thickness (t); and
∘ the first identification information (3a) and the second identification information (3b) are not visible.

3. The identification document (1) according to any one of the preceding claims, wherein the connecting unit (15) inseparably connects a first card (10) and a second card (20) wherein the first and second card are connected along the entire length of an edge of the first card (10) to the entire length of an edge of the second card (20).

4. The identification document (1) according to any one of the preceding claims further comprising a security feature (32) such as an RFID chip module.

5. The identification document (1) according to claim 4, wherein the security feature (32) comprises a first subset of the security feature provided on a first card (10) and a second subset of the security feature provided on a second card (20), the first subset of the security feature and the second subset of the security feature in combination forming the security feature (32).

6. The identification document (1) according to any one of the preceding claims, wherein the at least two cards (10, 20) are connected in series and adjacent cards (10, 20) are connected such that they are foldable on top of each other.

7. The identification document (1) according to any one of the preceding claims, wherein the at least two cards (10, 20) and the connecting unit (15) are integrally formed.

8. The identification document (1) according to any one of the preceding claims, wherein the at least two cards (10, 20) and the connecting unit (15) are made of the same material.

9. The identification document (1) according to any one of the preceding claims, wherein each one of the at least two cards (10, 20) are made of PVC, ABS, PET or PC or a mixture of it.

10. The identification document (1) according to any one of the preceding claims, wherein each of the at least two cards (10, 20) has a thickness in the range of 400 µm to 840 µm.

11. The identification document (1) according to any one of the preceding claims, wherein at least one of the at least two cards (10, 20) comprise one or more layers (30) made of plastic such as PVC or PC.

12. The identification document (1) according to any one of the preceding claims, comprising an RFID chip module (32) containing personal data and a shielding layer (31) configured to shield electromagnetic waves, the shielding layer (31) preferably covering at least one of the at least two cards (10, 20).

13. The identification document (1) according to claims 12, wherein the RFID chip module (3, 32) and the shielding layer (31) are arranged such that the shielding layer (31) prevents access to the personal data of the RFID chip module (3, 32) in the closed state of the identification document (1).

14. The identification document (1) according to claim 12 or 13, wherein the shielding layer (31) comprises copper or aluminum.

15. The identification document (1) according to any one of the preceding claims, further comprising a locking device configured to hold together the at least two cards (10, 20) when the identification document (1) is in the closed state.

16. The identification document (1) according to claim 15, wherein the locking device comprises a magnet element (25).

17. The identification document (1) according to any one of the preceding claims, having a first dimension and a second dimension according to ID 1 size when in the closed state, the dimensions being defined according to international standard ISO/IEC 7810, latest available version as of November 2021.

18. The identification document (1) according to any one of the preceding claims, having a first dimension or a second dimension according to 2 x ID 1 size when in open state, the dimensions being defined according to international standard ISO/IEC 7810, latest available version as of November 2021.
